# EUROPEAN PATENT APPLICATION

(11) **EP 2 407 419 A1**
(43) Date of publication of application: **18.01.2012**
(21) Application number: 10169861.1
(22) Date of filing: 16.07.2010
(51) Int. Cl.: C01B 3/04, C01B 13/02

(54) **Photocatalytic water splitting**

(71) Applicant: Universiteit Twente, 7522 NB Enschede (NL)
(72) Inventor: Mul, Guido, 2632 AA Nootdorp (NL); Van der Wiel, Wilfred Gerard, 7521 ME Enschede (NL); De Jong, Machiel Pieter, 7523 LG Enschede (NL)
(74) Representative: Hatzmann, Martin

(57) **Abstract**

The invention is directed to a method for photocatalytic water splitting, and to an apparatus for carrying out said method.

The method of the invention comprises
- oxidising water with an oxygen evolution photocatalyst by irradiation with light, causing an electron to be generated in the conduction band of the oxygen evolution photocatalyst and a hole to be generated in the valence band of the oxygen evolution photocatalyst;
- reducing water with a hydrogen evolution photocatalyst by irradiation with light, causing an electron to be generated in the conduction band of the hydrogen evolution photocatalyst and a hole to be generated in the valence band of the hydrogen evolution photocatalyst;

wherein said oxygen evolution photocatalyst is in contact with a first side of an electrically conductive separator layer and said hydrogen evolution photocatalyst is in contact with a second side of said electrically conductive separator layer, and
wherein the electron from the conduction band of the photo-excited oxygen evolution photocatalyst recombines with the hole from the valence band of the photo-excited hydrogen evolution photocatalyst via charge transfer through the electrically conductive separator layer.

## Description

The invention is directed to a method for splitting water photocatalytically, and to an apparatus for carrying out said method.

The global energy challenge is universal, and a transfer to alternative sustainable energy sources, in particular the sun, is inevitable. The obvious prerequisite is that energy should be available for twenty-four hours a day. Since solar energy is only available during day-time it would be highly advantageous to store the energy in an appropriate manner. Storage in the form of hydrogen would be a very attractive way to realise this. An ideal process for hydrogen production is to use water as a hydrogen source together with solar energy for conversion. Accordingly, photocatalytic water splitting (which is the light-induced conversion reaction of water to hydrogen and oxygen) has attracted attention as one of the most promising hydrogen production processes.

Efficient water splitting, using photocatalysts, has been a huge challenge for researchers. Moreover, water splitting by using a renewable form of energy is possibly the ultimate solution to environmental and energy issues. Nevertheless, the development of highly active photocatalysts for water splitting was hampered for a long time because of the difficulty of the themodynamically uphill reaction.

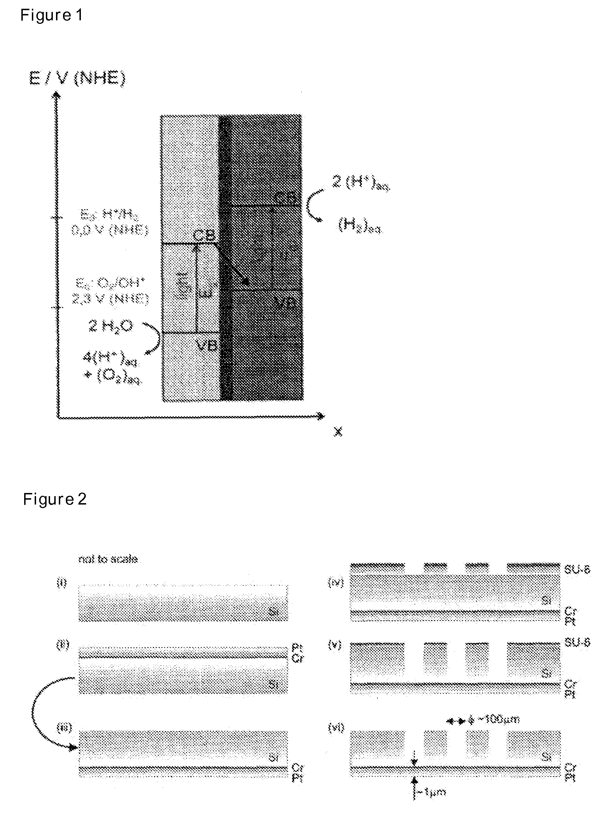

Furthermore, it has been a challenge to efficiently utilise the visible part of the solar spectrum. Most single-component oxide photocatalysts need to be activated by the ultraviolet fraction of the solar spectrum, which is only a small part (about 4 %) of the total solar spectrum. To circumvent this problem, photocatalytic systems based on the so-called Z-scheme have been developed, which allow the utilisation of the visible light fraction of the solar spectrum. The Z-scheme is schematically shown in Figure 1.

The Z-scheme operates by visible-light absorption of an oxygen evolution photocatalyst, which leads to oxygen production. The energy level of the photogenerated electron in the conduction band of this oxygen evolution photocatalyst is not high enough to induce hydrogen formation, and needs to recombine with the photogenerated hole in the valence band of the hydrogen evolution photocatalyst. The photogenerated electron in the conduction band of the hydrogen evolution photocatalyst induces hydrogen generation.

Among others, Kudo and co-workers developed various visible light-responsive catalyst systems for overall water splitting, based on (1) a Z-scheme and (2) an electron transfer by a Fe²⁺/Fe³⁺ redox couple in solution, or by self-assembly of the contact between the two catalyst particles (Kudo et al., Chem. Soc. Rev. 2009, 38, 253-278). It is evident that in both cases electron transport is suboptimal, whereas the efficiency of transfer of the photogenerated electron from the conduction band of the oxygen evolution photocatalyst to the valence band of the hydrogen evolution photocatalyst needs to be high to achieve high overall water splitting efficiency.

Also in the patent literature photocatalytic systems for water splitting have been proposed. WO-A-2008/102351 describes a slightly related system which applies semiconductor-metal hybrid nano-assemblies. In the invention described in WO-A-2008/102351, a photon is absorbed by the semiconductor region of the hybrid nano-assembly, which results in a charge separation. While one charge carrier stays in the semiconductor region, the other is transferred to the metal/metal alloy region of the hybrid nano-assembly where a redox reaction can take place. In a dispersion of these hybrid nano-assemblies, however, the generated hydrogen and oxygen would be difficult to separate, and are likely to recombine, producing water. Furthermore, this system will not be very effective in visible light induced water splitting.

There remains a challenge in providing a simple design for efficiently using visible light in photocatalytic water splitting. An objective of the invention is to provide a solution to this challenge.

The inventors found an elegant solution by separating an oxygen evolution photocatalyst and a hydrogen evolution photocatalyst by an electrically conductive separator layer.

Accordingly, in a first aspect the invention is directed to a method for photocatalytically splitting water, comprising
- oxidising water with an oxygen evolution photocatalyst by irradiation with light, causing an electron to be generated in the conduction band of the oxygen evolution photocatalyst and a hole to be generated in the valence band of the oxygen evolution photocatalyst;
- reducing water with a hydrogen evolution photocatalyst by irradiation with light, causing an electron to be generated in the conduction band of the hydrogen evolution photocatalyst and a hole to be generated in the valence band of the hydrogen evolution photocatalyst;
wherein said oxygen evolution photocatalyst is in contact with a first side of an electrically conductive separator layer and said hydrogen evolution photocatalyst is in contact with a second side of said electrically conductive separator layer, and
wherein the electron in the conduction band of the photo-excited oxygen evolution photocatalyst recombines with the hole in the valence band of the photo-excited hydrogen evolution photocatalyst via charge transfer through the electrically conductive separator layer.

The method of the invention enables a very efficient charge transfer from the conduction band of the photo-excited oxygen evolution photocatalyst to the valence band of the photo-excited hydrogen evolution photocatalyst through the relatively thin electrically conductive separator layer. Since this charge transfer is very efficient, recombination of electrons in the conduction band of the photo-excited oxygen evolution photocatalyst with holes in the valence band of the photo-excited oxygen evolution photocatalyst is strongly suppressed. Similarly, recombination of electrons in the conduction band of the photo-excited hydrogen evolution photocatalysts with holes in the valence band of the photo-excited hydrogen evolution photocatalyst is very limited. Such recombination is further suppressed by the oxygen evolution reaction at the oxygen evolution photocatalyst, and by the hydrogen evolution reaction at the hydrogen evolution photocatalyst. The light used for exciting the photocatalysts is preferably visible light.

The oxygen evolution photocatalyst and/or the hydrogen evolution photocatalyst are preferably in the form of photocatalytically active nanoparticles and/or nanostructured thin films. This is advantageous because of the high surface to volume ratio and the short distance to the electrically conductive separator layer.

The visible-light-sensitive hydrogen evolution photocatalysts reported in the prior art are typically sensitive metal doped TiO₂ based systems, or alternatively oxynitrides (*e.g*. TaON). Many of these particles have been studied. Extensive tables are, for instance, published in Kudo et al., Chem. Soc. Rev. 2009, 38, 253-278. Photocatalytically active nanoparticles that can be used as oxygen evolution photocatalyst in general have an oxidation potential below that of water. Some examples in the method of the invention include Pt/WO₃, RuO₂/TaON, BiVO₄, Bi₂MoO₆, and WO₃. Photocatalytically active nanoparticles that can be used as hydrogen evolution photocatalysts in general have a reduction potential above that of water. Some examples of use to the method of the invention include Pt/SrTiO₃:Cr,Ta, Pt/TaON, and Pt/SrTiO₃:Rh. More specifically, the following combinations of oxygen evolution photocatalysts and hydrogen evolution catalysts are preferred for use in the method of the invention: WO₃ as O₂ photocatalyst with Pt/TaON as H₂ photocatalyst, BiVO₄ as O₂ photocatalyst with Pt/SrTiO₃:Rh as H₂ photocatalyst, Bi₂MoO₆ as O₂ photocatalyst with Pt/SrTiO₃:Rh as H₂ photocatalyst, and WO₃ as O₂ photocatalyst with Pt/SrTiO₃:Rh as H₂ photocatalyst. It is also possible to apply mixtures of different types of oxygen evolution photocatalysts and/or mixtures of different types of hydrogen evolution photocatalysts, for example to extend the usable range of the visible spectrum.

The photocatalyst nanoparticles can have various shapes, including spheric, cubic, pyramidal, and prism shapes. In particular, nanoparticle shapes having one or more specific surface planes can be advantageous in view of the potentially large surface area that can be in contact with the electrically conductive separator layer. Furthermore, it has been reported that electrons and holes have a preference for accumulation at specific crystallographic surfaces. A smart reaction that has demonstrated this is the preferential deposition of metal particles on surfaces of TiO₂. Pt²⁺ was found to be preferentially reduced to Pt⁰ and deposited on the {110} face of rutile particles (Ohno et al., New J. Chem. 2002, 26, 1167-1170).

Although in the method of the invention it is preferred to use photocatalysts in the form of nanoparticles, the invention is not limited thereto. Other embodiments may be envisaged in which a layer (preferably a discontinuous, nanostructured layer) of photocatalyst material is applied on the electrically conductive separator layer. Also combinations of such a layer and nanoparticles are comprised in the present invention.

The photocatalyst can suitably be deposited from solution or suspension, or by other deposition techniques including, pulsed laser deposition, physical vapour deposition and atomic layer deposition. When the photocatalyst is in the form of nanoparticles, then the photocatalyst is preferably applied from solution or dispersion.

The amount of photocatalyst to be used on either side of the electrically conductive separator layer can vary, depending, *e.g*. on the type of photocatalyst and the thickness of the electrically conductive separator layer. Preferably, the photocatalyst is applied on the electrically conductive separator layer in an amount which provides complete coverage on one or both sides of the separator layer. Over coverage (i.e. more than complete coverage) may lead to a situation where charge transfer to the electrically conductive separator layer is not optimal (such as in the case of an over coverage of photocatalyst nanoparticles).

The electrically conductive separator layer is preferably a metal. Examples of metals that can be used in the electrically conductive separator layers include platinum, gold, chromium and titanium. These metals may be used individually or in combination. However, also other conductive materials can be used, such as transparent conductive oxides including tin-doped indium oxide (ITO).

It is preferred that the electrically conductive separator layer has a thickness as measured by Scanning Electron Microscopy (SEM) in the range of 100-5000 nm, preferably in the range of 200-3000 nm. A thin electrically conductive separator layer gives fast charge transfer through the separator layer. This in turn yields an efficient recombination of the electron in the conduction band of the photo-excited oxygen evolution photocatalyst with the hole in the valence band of the photo-excited hydrogen evolution photocatalyst.

In an embodiment, the thin electrically conductive separator layer is mechanically supported by one or more perforated supports. This is particularly advantageous when the electrically conductive separator layer is so thin that it has low mechanical stability of itself. A perforated support can be provided on one or on both surfaces of the electrically conductive separator layer. Since the support is perforated it allows the photocatalysts to be in direct contact with the electrically conductive separator layer, which of course is desirable in terms of efficient electron transfer.

The perforated support can have a thickness in the range of 50-1000 µm, preferably in the range of 100-750 µm, which can be determined by Scanning and/or Transmission Electron Microscopy. A suitable and practical support is, for instance, a silicon support, such as a silicon wafer. If necessary, the support can be perforated, such as by standard etching processes. In many cases it is advantageous to prepare the electrically conductive separator layer on a support, and optionally thereafter perforate the support. For example, an electrically conductive layer (such as a metal layer) can be deposited on a mechanical support (such as a silicon wafer). Suitable deposition techniques include *e.g*. evaporation or sputtering. After turning the support around, it can be perforated by photolithography using a standard photoresist (such as SU-8) and etching holes in the support, thereby exposing the underlying electrically conductive layer. Thereafter, photoresist may optionally be removed. This fabrication is exemplified in the embodiment of Figure 2. In the embodiment of Figure 2, the fabrication is started in step (i) with a silicon wafer which acts as the support. In step (ii), a metal film is evaporated or sputtered on top of the silicon wafer. The metal film acts as the electrically conductive separator layer. In the embodiment, shown in Figure 2 a platinum layer with a chromium adhesion layer is applied. In step (iii) the silicon wafer is turned around. Thereafter, in step (iv) openings are defined with photolithography using a standard photoresist such as SU-8. After development, reactive ion etching (RIE) is applied to etch holes through the silicon wafer in step (v) with very high aspect ratios (of about 10). The photoresist can then be removed, *e.g*. by washing with acetone, as shown in step (vi). The fabrication as shown in Figure 2 is merely illustrative and the skilled person will be able to deduce analogous fabrication methods based on the information provided herein.

In an advantageous embodiment, the surface area of the electrically conductive separator layer is increased. This improves the efficiency for water splitting, since efficient charge transfer is only possible for particles that are in direct contact with the metal. The surface area of the electrically conductive separator layer can be increased, *e.g*. by electron beam lithography, nano imprint lithography or laser interference lithography, to create a sub-micron patterning of (periodic) protruding structures over large areas. A suitable structure is *e.g*. a periodic array of electrically conductive nanopillars. Such nanopillars can, *e.g*. have a diameter in the range of 10-100 nm, and a height in the range of 10-500 nm.

In this manner, an electrically conductive separator layer on a support can be provided, wherein the support is perforated (*e.g*. sieve structure) and the pores are in the form of holes that pierce through the entire thickness of the support, thereby exposing the electrically conductive separator layer.

When subsequently photocatalyst material is deposited, preferably in the form of nanoparticles, the photocatalyst material settles within the openings of the mechanical support, thereby directly contacting the exposed electrically conductive separator layer within the openings..

In order to minimise recombination of photo-excited electron-hole pairs, the charge carriers that do not participate in the half-reactions involved in water splitting must be efficiently transferred across the electrically conductive separator layer. On the other hand, the counter charges should remain on the photocatalyst material to drive the generation of oxygen and hydrogen. For the oxygen evolution catalyst, for instance, faster transfer of photo-excited electrons to the electrically conductive separator layer is desirable, while hole transfer should be minimised. The conduction band and valence band edges of the photocatalyst materials typically have distinctly different character, which allows for a tuning of the electron/hole transfer rates. For example, in TiO₂ the conduction band edge is derived from Ti(3d) states, while the valence band edge has O(2p) character. Hybridisation of Ti(3d) orbitals with continuum bands of the electrically conductive separator material (preferably metal) at the interface, which can be accomplished via bonding to unsaturated surface Ti-sites of TiO₂ nanoparticles, would lead to strong electronic coupling between those states, and thus fast transfer of photo-excited electrons from TiO₂ to the electrically conductive separator material. The hybridisation scheme can be controlled via the surface termination of the particles, in this specific example of TiO₂ going from Ti-rich, to stoichiometric, to oxygen-rich, which allows for tuning of the electron or hole transfer efficiency.

Besides optimised electronic coupling, band alignment is an important issue, since the valence and conduction bands of the photocatalyst materials have to match the energy window determined by the redox potentials for oxygen/hydrogen generation. Since, in a preferred embodiment, photocatalyst nanoparticles are coupled to a metal separator layer, the metal/nanoparticle system should be considered in the design, instead of the electronic properties of the isolated nanoparticles. This opens up an additional route to tune the energy levels, via interfacial band alignment rather than intrinsic electronic structure. This includes, for instance, interfacial band alignment by surface modification of the nanoparticles and/or surface modification of the electrically conductive separator layer. The surface modification may be chemical, *e.g*. by adsorbing self-assembled monolayers or donor/acceptor molecules, and/or physical, *e.g*. by utilizing nanoparticles with well defined crystal facets.

In operation, protons that are generated in accordance with the oxygen generating half-reaction at the oxygen evolution photocatalyst can diffuse from the oxygen evolution photocatalyst to the hydrogen evolution photocatalyst through solution. At the hydrogen evolution photocatalyst, the protons will be consumed in accordance with the hydrogen generating half-reaction.

Oxygen gas that is generated at the oxygen evolution photocatalyst will move upwards due to its lower density than water on one side of the electrically conductive separator layer, where it can be collected. Simultaneously, hydrogen gas that is generated at the hydrogen evolution photocatalyst will move upwards due its lower density than water on the other side of the electrically conductive separator layer. Hence, it is preferred that the method of the invention is performed in a container (or "cell") that contains water, wherein the electrically conductive separator layer separates an oxygen evolution chamber from a hydrogen evolution chamber. In order to allow free diffusion of protons from the oxygen evolution chamber to the hydrogen evolution chamber, the electrically conductive separator layer preferably does not fully extend to the bottom of container. By extending the electrically conductive separator layer to the top of the container, oxygen generated in the oxygen evolution chamber and hydrogen generated in the hydrogen evolution chamber are prevented from mixing and reacting.

Light (preferably visible light) should be able to access the photocatalysts in order to photoexcite the photocatalysts and provide the required energy for the water splitting reaction. This may be achieved by using transparent materials for the container and/or the electrically conductive separator layer. However, it is also possible to direct light to the photocatalysts by using mirrors and/or concentrators.

In a further aspect, the invention is directed to an apparatus, preferably for performing the water splitting method of the invention, said apparatus comprising
- a container for receiving water to be split photocatalytically
- an electrically conductive separator layer extending in an inner space of said container, said layer in use being in contact with the water received in said container,
- wherein at least a part of a first surface of the electrically conductive separator layer extending in the water, is provided with oxygen evolution photocatalyst and at least a part of a second surface of the electrically conductive separator layer extending in the water, said second surface preferably being substantially opposite of the first surface, is provided with hydrogen evolution photocatalyst,
wherein the electrically conductive separator layer is arranged in the container such that light is able to reach the oxygen evolution photocatalyst and the hydrogen evolution photocatalyst in order to enable oxidising water with said oxygen evolution photocatalyst and at the same time reducing water with a hydrogen evolution photocatalyst in order to split the water.

Water to be split photocatalytically is present in the container. In an inner space of the container an electrically conductive separator layer is provided. This may for instance be a layer that extends from a lid of the container downwards and separates the container in two compartments. The electrically conductive separator layer is in contact with the water in the container (this is meant to include the situation where only photocatalyst on the surface of the electrically conductive separator layer is in contact with the water in the container).

A first surface of the electrically conductive separator layer is provided with oxygen evolution photocatalyst in order to enable water oxidation, while a second surface (which is preferably the opposite surface of the layer) is provided with a hydrogen evolution photocatalyst in order to enable water reduction. In order to enable water oxidation and water reduction the part of the first and second surfaces provided with oxidation evolution photocatalyst and hydrogen evolution photocatalyst, respectively, should extend in the water present in the container.

The electrically conductive separator layer is arranged in the container such that light (preferably visible light) is able to reach the oxygen evolution photocatalyst and the hydrogen evolution photocatalyst in order to enable oxidising water with said oxygen evolution photocatalyst and at the same time reducing water with a hydrogen evolution photocatalyst in order to split the water. This may, for instance, be achieved by making a wall of the container (or a part thereof extending substantially parallel to the electrically conductive separator layer) transparent to light (preferably visible light) such that (visible) light can reach the oxygen evolution photocatalyst as well as the hydrogen evolution photocatalyst. In another embodiment, the container comprises a mirror assembly arranged in the inner space of the container such that light entering the container through an inlet opening in said container is directed to the electrically conductive separator layer such that the light can reach the oxygen evolution photocatalyst as well as the hydrogen evolution photocatalyst.

In order to mechanically support the electrically conductive separator layer, it can be provided with one or more supports, which comprise receiving sections for receiving the oxygen evolution photocatalyst and/or the hydrogen oxygen evolution photocatalyst. Preferably, the one or more supports are perforated supports and the perforations form the receiving sections for the oxygen evolution photocatalyst and/or the hydrogen evolution photocatalyst. The support may be provided either on one side of the electrically conductive separator layer, or on both sides of the electrically conductive separator layer.

In a preferred embodiment, a first upper end of the container comprises an oxygen outlet in fluid connection with an oxygen evolution chamber and a hydrogen outlet in fluid connection with a hydrogen evolution chamber, said chambers defined by at least part of an circumferential wall of the container and by the electrically conductive separator layer, and where at a second lower end of the container, preferably opposite the first end, an opening is provided between the electrically conductive separator layer and a bottom wall of the container to provide a fluid connection between the oxygen evolution chamber and the hydrogen evolution chamber. The opening between the electrically conductive separator layer and the bottom wall of the container then allows proton transport from the oxygen evolution chamber to the hydrogen evolution chamber, *e.g*. by diffusion.

The electrically conductive separator layer preferably has a thickness as measured by SEM in the range of 100-5000 nm, more preferably in the range of 200-3000 nm.

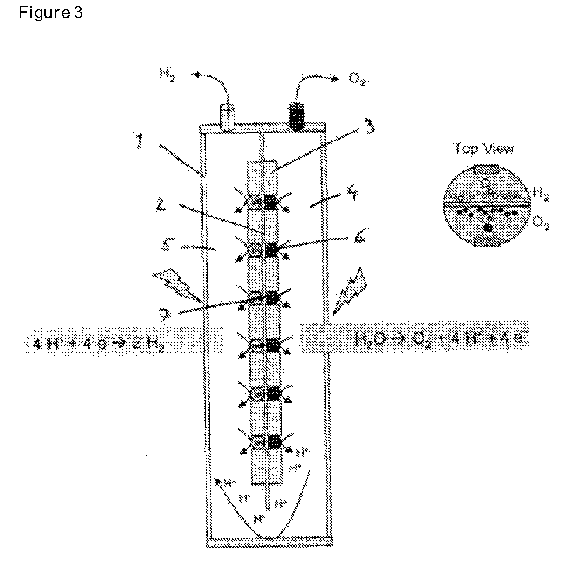

An illustrative embodiment of the process and the apparatus of the invention is schematically shown in Figure 3. In this Figure a container (1) is shown, wherein electrically conductive separator layer (2), mechanically supported by perforated support (3), separates oxygen evolution chamber (4) and hydrogen evolution chamber (5). Oxygen evolution photocatalyst nanoparticles (6) are in direct contact with electrically conductive separator layer (2) in oxygen evolution chamber (4), while hydrogen evolution photocatalyst nanoparticles (7) are in direct contact with the electrically conductive separator layer (2) in hydrogen evolution chamber (5). Since electrically conductive separator layer (2) does not extend to the bottom of container (1) the water in oxygen evolution chamber (4) is fluidly connected with the water in hydrogen evolution chamber (5) allowing protons to diffuse from the oxygen evolution photocatalyst to the hydrogen evolution photocatalyst. Upon photoexcitation of the oxygen and hydrogen evolution photocatalysts, the oxygen generating half-reaction of water splitting takes place in oxygen evolution chamber (4), and the hydrogen generating half-reaction of water splitting takes place in hydrogen evolution chamber (5). The top view of the container shows that the generated oxygen and hydrogen gas are spatially separated by the electrically conducting separator layer, which allows an easy separated collection of these gases.

In operation, irradiation with light causes photoexcitation of oxygen evolution photocatalyst (6) and hydrogen evolution photocatalyst (7). The photogenerated hole in the valence band of oxygen evolution photocatalyst (6) is used for the oxidation of water in oxygen evolution chamber (4), while the photogenerated electron in the conduction band of hydrogen evolution photocatalyst (7) is used for the reduction of water in hydrogen evolution chamber (5). Electrically conductive separator layer (2) allows for efficient recombination of the photogenerated electron in the conduction band of oxygen evolution photocatalyst (6) with the photogenerated hole in the valence band of hydrogen evolution photocatalyst (7). At the same time, electrically conductive separator layer (2) serves as a barrier for photocatalytically generated oxygen and hydrogen.

## Claims

1. Method for photocatalytically splitting water, comprising
- oxidising water with an oxygen evolution photocatalyst by irradiation with light, causing an electron to be generated in the conduction band of the oxygen evolution photocatalyst and a hole to be generated in the valence band of the oxygen evolution photocatalyst;
- reducing water with a hydrogen evolution photocatalyst by irradiation with light, causing an electron to be generated in the conduction band of the hydrogen evolution photocatalyst and a hole to be generated in the valence band of the hydrogen evolution photocatalyst;
wherein said oxygen evolution photocatalyst is in contact with a first side of an electrically conductive separator layer and said hydrogen evolution photocatalyst is in contact with a second side of said electrically conductive separator layer, and
wherein the electron from the conduction band of the photo-excited oxygen evolution photocatalyst recombines with the hole from the valence band of the photo-excited hydrogen evolution photocatalyst via charge transfer through the electrically conductive separator layer.

2. Method according to claim 1, wherein said electrically conductive separator layer is mechanically supported by one or more perforated supports, such as a perforated silicon support, wherein preferably the perforations have an average diameter as measured by SEM in the range of 10-500 µm, preferably in the range of 50-200 µm.

3. Method according to claim 1 or 2, wherein said oxygen evolution photocatalyst and/or said hydrogen evolution photocatalyst are in the form of photocatalytically active nanoparticles, preferably having a spherical, cubic, pyramidal, or prism shape.

4. Method according to any one of claims 1-3, wherein said electrically conductive separator layer is a metal layer.

5. Method according to any one of claims 1-4, wherein one or both surfaces of the electrically conductive separator layer is or are nanostructured to enhance surface area, preferably the surfaces of the electrically conductive separator comprise nano-sized pillars or pits.

6. Method according to any one of claims 1-5, wherein said oxygen evolution photocatalyst is a material having a valence band potential below the oxidation potential of water, such as a material selected from the group consisting of Pt/CdS, WO₃, BiVO₄, Bi₂MoO₆, Bi₂WO₆, AgNbO₃, Ag₃VO₄, TiO₂:Cr,Sb, TiO₂:Ni,Nb, and In₂O₃(ZnO)₃.

7. Method according to any one of claims 1-6, wherein said hydrogen evolution photocatalyst is a material with a conductance band potential above the reduction potential of water, such as a material selected from the group consisting of Pt/In₂O₃(ZnO)₃, Pt/SrTiO₃:Cr,Sb, Pt/SrTiO₃:Cr,Sb, Pt/SrTiO₃:Cr,Ta, Pt/SrTiO₃:Rh, Pt/SnNb₂O₆, Pt/NaInS₂, Pt/AgInZn₇S₉, Ru/Cu_{0.09}.In_{0.09}Zn_{1.82}S₂, Ru/Cu_{0.25}Ag_{0.25}In_{0.5}ZnS₂, ZnS:Cu, ZnS:Ni, ZnS:Pb,Cl.

8. Method according to any one of claims 1-7, wherein said oxygen evolution photocatalyst and/or said hydrogen evolution catalyst has/have an absorption maximum in the range of 350-3000 nm.

9. Method according to any one of claims 1-8, wherein the oxygen evolution photocatalyst comprises two or more photocatalysts with a different absorption spectrum and/or the hydrogen evolution photocatalyst comprises two or more photocatalysts with a different absorption spectrum.

10. Method according to any one of claims 1-9, wherein said oxygen evolution photocatalyst and/or said hydrogen evolution catalyst is/are sensitised, such as by an organic dye.

11. Apparatus for photocatalytically splitting water, preferably according to any one of the preceding claims, wherein the apparatus comprises:
- a container for receiving water to be split photocatalytically,
- an electrically conductive separator layer extending in an inner space of said container, said layer in use being in contact with the water received in said container,
- wherein a first surface of the electrically conductive separator layer, at least a part thereof extending in the water, is provided with oxygen evolution photocatalyst and a second surface, preferably substantially opposite of the first surface, is provided with hydrogen evolution photocatalyst,
wherein the electrically conductive separator layer is arranged in the container such that light is able to reach the oxygen evolution photocatalyst and the hydrogen evolution photocatalyst in order to enable oxidising water with said oxygen evolution photocatalyst and at the same time reducing water with a hydrogen evolution photocatalyst in order to split the water.

12. Apparatus according to claim 11, wherein a wall of the container, at least a part thereof extending substantially parallel to the electrically conductive separator layer, is transparent such that light can reach the oxygen evolution photocatalysts as well as the hydrogen evolution photocatalysts.

13. Apparatus according to claim 11, wherein the container comprises a mirror assembly arranged in the inner space of the container such that light entering the container through an inlet opening in said container is directed to the electrically conductive separator layer such that the light can reach the oxygen evolution photocatalysts as well as the hydrogen evolution photocatalysts.

14. Apparatus according to any one of claims 11-13, wherein the electrically conductive separator layer comprises one or more supports, preferably one or more perforated supports, which support comprises receiving sections for receiving said oxygen evolution photocatalysts and/or said hydrogen oxygen evolution photocatalysts.

15. Apparatus according to any one of claims 11-14, wherein a first upper end of said container comprises an oxygen outlet in fluid connection with an oxygen evolution chamber and a hydrogen outlet in fluid connection with a hydrogen evolution chamber, said chambers defined by at least part of an circumferential wall of the container and by the electrically conductive separator layer, and where at a second lower end of the container, preferably opposite the first end, an opening is provided between the electrically conductive separator layer and a bottom wall of the container to provide a fluid connection between the oxygen evolution chamber and the hydrogen evolution chamber.
